# EUROPEAN PATENT APPLICATION

(11) **EP 1 688 047 A1**
(43) Date of publication of application: **09.08.2006**
(21) Application number: 04819318.9
(22) Date of filing: 18.11.2004
(51) Int. Cl.: A23L 1/10

(54) **COOKED RICE HAVING GOOD KEEPING QUALITIES AT LOW TEMPERATURE AND METHOD FOR PRODUCING THE SAME**

(30) Priority: 25.11.2003 JP 2003394287
(71) Applicant: Fuji Oil Company, Ltd., Osaka-shi, Osaka 542-0086 (JP)
(72) Inventor: TAKAHASHI, Taro, c/o Fuji Oil Company, Limited, Izumisano-shi, Osaka 598-8540 (JP); ISHIBASHI, Keiko, c/o Fuji Oil Company, Limited, Tokyo 105-0024 (JP); SATO, Yoko, c/o Fuji Oil Company, Limited, Tokyo 105-0024 (JP); ASANO, Hirokazu, c/o Fuji Oil Company, Limited, Tokyo 105-0024 (JP); MAEDA, Hirokazu, c/o Fuji Oil Company, Limited, Tsukuba-gun, Ibaraki 300-2436 (JP); FUKUDA, Youichi, c/o Fuji Oil Company, Limited, Izumisano-shi, Osaka 598-8540 (JP); FURUTA, Hitoshi, c/o Fuji Oil Company, Limited, Izumisano-shi, Osaka 598-8540 (JP)
(74) Representative: Manaton, Ross Timothy
(86) International application number: PCT/JP2004/017137
(87) International publication number: WO 2005/051096

(57) **Abstract**

A cooked rice food product reduced in the degradation in taste, texture, and aspects of quality due to distribution in the refrigerated or frozen state and thawing at a low temperature or at room temperature as a method rendering it into a consumable state, by the addition of water-soluble soybean polysaccharides, a sugar alcohol, and amylase.

## Description

### Technical Field

The present invention relates to cooked rice superior in storability at a low temperature and resistant to degradation such as hardening even if used distributed at a low temperature involving a low temperature environment over a long period of time, and a method of production of the same.

### Background Art

Cooked rice is known to become hard and decline in texture and taste over time. This phenomenon is generally called "retrogradation". This retrogradation becomes conspicuous under an environment of a temperature lower than ordinary temperature, in particular storage and distribution at -5 to 10°C and thawing. Improvement of the durability of cooked rice against retrogradation in low temperature storage for enabling mass production of cooked rice, storage over long periods of time, and distribution over long distances, mainly an efficient measure for preventing retrogradation, is therefore required.

As methods for preventing retrogradation of cooked rice in the past, the method of increasing the amount of water added at the time of cooking or adding an enzyme (see Patent Documents 1, 4, 6 and 7), the method of adding water-soluble hemicellulose (see Patent Document 3), the method of adding trehalose (Patent Document 2), the method of using both water-soluble hemicellulose and trehalose (Patent Document 5), etc. have been proposed. Further, experiments with adding oils and fats (Patent Document 8), using emulsions (Patent Document 9), adding modified starch (Patent Document 10), etc. have been known.

With the method of adding one or more enzymes before cooking or after cooking so as to prevent retrogradation by enzymatic action, one of these enzymes acting on starch, amylase, acts on the glutinated starch and works to suppress retrogradation of the starch. However, since the decomposition reaction proceeds from the surface successively to the inside, when cooked rice acted upon by amylase is stored over a long period, the surface becomes overly soft, the cooked rice loses its firmness and suitable chewiness and the taste is impaired. Further, even with an enzyme such as protease acting on protein, since more protein exists at the surface of cooked rice than the center, the surface breaks down greatly and becomes much more soft than the center of the cooked rice, so the inherent texture of cooked rice is lost.

On the other hand, the methods of adding a saccharide such as trehalose (see Patent Document 2) or adding a sugar alcohol for suppressing hardening at the time of storage (see Patent Document 11) have been seen, but when using such methods, the texture of the cooked rice stored over a long period cannot necessarily be said to be good.

Further, when preparing cooked rice by adding soybean polysaccharides, when stored at a low temperature for a long period of time, the retrogradation of the starch can no longer be completely suppressed and a drop in taste is caused.

In addition, if considering restoring the rice to an edible state after low temperature storage, after for example storage frozen, there are the methods of thawing by a microwave oven, thawing in a refrigerator, or thawing at room temperature. The method of thawing by a microwave oven however is hard to be applied to the reheating of sushi and other cooked rice containing other ingredients. Further, thawing at room temperature is not preferable health wise. With thawing in a refrigerator, the health problems can be avoided, but the cooked rice easily degrades in texture and taste and ends up not tasting good when consumed.

Up until now, none of the above techniques has been able to deal with long term storage in a low temperature environment such as refrigeration and freezing, in particular long term storage (for example, over a period of four days or more) in a refrigerator, and able to satisfy the broad range of conditions for preventing degradation of quality in thawing in a refrigerator after storage frozen.

Patent Document 1: Japanese Examined Patent Publication (Kokoku) No. 48-37827
Patent Document 2: Japanese Unexamined Patent Publication (Kokai) No. 8-168350
Patent Document 3: Japanese Unexamined Patent Publication (Kokai) No. 11-285350
Patent Document 4: Japanese Unexamined Patent Publication (Kokai) No. 58-86050
Patent Document 5: Japanese Unexamined Patent Publication (Kokai) No. 2000-166491
Patent Document 6: Japanese Unexamined Patent Publication (Kokai) No. 60-199355
Patent Document 7: Japanese Unexamined Patent Publication (Kokai) No. 3-180151
Patent Document 8: Japanese Unexamined Patent Publication (Kokai) No. 56-55167
Patent Document 9: Japanese Unexamined Patent Publication (Kokai) No. 59-109144
Patent Document 10: Japanese Unexamined Patent Publication (Kokai) No. 2000-41598
Patent Document 11: Japanese Unexamined Patent Publication (Kokai) No. 9-163943

### Disclosure of the Invention

### Problems to be Solved by the Invention

An object of the present invention is to provide cooked rice suppressed in degradation of quality such as hardening even if stored for a long period of time at a low temperature, whether by refrigeration or freezing, and suitable for distribution at a low temperature, in particular cooked rice with little degradation and good in texture even when thawed in a refrigerator after storage frozen, and a method of production of the same.

### Means for Solving the Problems

The inventors engaged in intensive research to attain the above object and as a result discovered that cooked rice to which water-soluble soybean polysaccharides, amylase, and a sugar alcohol have been added can be reduced in degradation of taste, texture, and other aspects of quality due to distribution in a refrigerated state or distribution in a frozen state much more effectively than by conventional methods and can be rendered into an edible state by the method of thawing in a refrigerator which is free of the health problems accompanying thawing at room temperature, and thereby completed the present invention.

That is, according to a first aspect of the present invention, there is provided cooked rice superior in low temperature tolerance containing water-soluble soybean polysaccharides, amylase, and a sugar alcohol. Preferably, the amylase is β-amylase or glucoamylase and the sugar alcohol is erythritol. The cooked rice may be one stored by freezing or refrigeration for a period of at least four days. According to a second aspect of the present invention, there is provided a method of production of cooked rice superior in low temperature tolerance comprising adding water-soluble soybean polysaccharides, amylase, and a sugar alcohol. Note that the refrigeration temperature range of the present invention is 0 to 10°C, while the freezing temperature range is -18°C or less.

### Effect of the Invention

According to the present invention, it becomes possible to prevent hardening of the cooked rice grains due to retrogradation of the starch resulting from long term storage under a low temperature environment and maintain the taste, so mass production of cooked rice, long term storage through low temperature distribution such as with refrigeration or freezing, and delivery to distant locations become possible.

### Best Mode for Carrying Out the Invention

The water-soluble soybean polysaccharides is believed to contribute to an increase in the amount of water absorbed by the cooked rice, while the sugar alcohol is believed to be effective in immobilizing the water absorbed in the cooked rice. That is, by adding the two materials, the amount of water absorbed by the cooked rice is greatly increased and immobilized. Further, by adding the amylase, hardening is prevented. The effect of improvement in terms of taste, texture, etc. also becomes more conspicuous. Even if thawed in a refrigerator after distribution in a refrigerated or frozen state, there is very little degradation of the taste, texture, etc. and therefore the storage period can be strikingly increased.

The amount of the water-soluble soybean polysaccharides added in the present invention is not particularly limited, but may for example be 0.01% to 15% with respect to the weight of the uncooked rice, preferably 0.05 to 10%, more preferably 0.1 to 5%. If the amount added is too small, the effect of protection of the cooked rice grains cannot be sufficiently obtained, while if the amount added is too great, the cooked rice becomes hard overall.

Further, the amylase in the present invention is for example α-amylase, β-amylase, glucoamylase, etc., but β-amylase and glucoamylase are preferable and β-amylase is particularly preferable.

Considering the extent of the effect, costs, etc., the enzyme is added in an amount of 10U to 5000U with respect to 100 g of the uncooked rice, preferably 100U to 2000U, more preferably 200U to 1000U. If the amount of the enzyme added is too small, a sufficient effect cannot be obtained, while if too great, the enzymatic reaction proceeds too much and the structure of the cooked rice is destroyed resulting in a poor texture. The method of finding the enzymatic activity is described below.

(Method of Measuring Enzymatic Activity)
Potato starch was suspended in a 0.3N sodium hydroxide solution at a concentration of 4% and was heated in a boiling solution for 5 minutes to cause gelatination. Next, this was adjusted to pH4.5 by 2N acetic acid and diluted to a final starch concentration of 1.2%. The result was used as the substrate solution. The enzyme was dissolved in distilled water to a concentration of 0.025%. 1 ml of this enzyme solution was added to 5 ml of the substrate solution warmed to 40°C. The result was allowed to react for 20 minutes, then was immersed in boiling water for 10 minutes to deactivate the enzyme. After deactivating the enzyme, the reducing sugar produced was measured using the Somogyi-Nelson method. The initial reaction rate was found from the amount of reducing sugar produced. The amount of enzyme required for generating a reduction ability equivalent to 1 mg of glucose at 40°C over 10 minutes was designated as 1U.

Further, as the sugar alcohol in the present invention, a polyhydric alcohol containing erythritol, reduced paratinose, sorbitol, xylitol, mannitol, maltitol, lactitol, and other sugar alcohols may be mentioned, but use of erythritol is particularly effective. The amount used cannot be generally defined since the action on the starch changes depending on the molecular weight or number, but 0.01 to 15% with respect to the uncooked rice is suitable, preferably 0.1 to 10%, more preferably 0.5 to 5.0%.

The effect of prevention of hardening of the cooked rice using soybean polysaccharides, a sugar alcohol, and amylase in the present invention is sufficiently obtained by just the above ingredients, but in some cases it is also possible to use ribose, arabinose, xylose, glucose, galactose, mannose, or another monosaccharide, sucrose, maltose, lactose, trehalose, raffinose, stachylose, fructooligosaccharides, galactooligosaccharide, xylooligosaccharide, lactosucrose, isomaltooligosaccharide, decomposed starch, decomposed guar gum, hydrolyzed cellulose, or other oligosaccharide, pectin, gum arabic, carragheenan, xanthane gum, gellan gum, guar gum, locust bean gum, tamarind seed polysaccharides, psyllium seed gum, cellulose, starch, modified starch, or other polysaccharides. There can also be used as an emulsifier, for example, a glycerol fatty acid ester, a sucrose fatty acid ester, a sorbitan fatty acid ester, a propylene glycol fatty acid ester, lecithin, etc. Further, it is also possible to jointly use ethanol, glycerin, ethylene glycol, propylene glycol, or another alcohol, gelatin, casein, whey protein, WPC, WPI, SPI, or another protein, sucrarose, aspartame, neotame, acesulfam K, or another sweetener, amino acid, glutamic acid, citric acid, beef extract, chicken extract, or another favoring material, benzoic acid, sorbic acid, soft roe protein, glycine, or another preservative.

Further, it is possible to add seasoned vinegar, an edible oil or fat, etc. to the cooked rice of the present invention. The vinegar is added in an amount of 0.1 to 5 wt% with respect to the uncooked rice, preferably 0.5 to 4 wt%, particularly preferably 1 to 3 wt%. The edible oil or fat is not particularly limited, but a usually used edible vegetable oil etc. may be used.

Further, the uncooked rice used for the cooked rice food product of the present invention is not particularly limited. It is possible to use any rice on the market. If using rice with a low amylose content, specifically rice having an amylose content of not more than 15%, preferably not more than 10%, it is possible to obtain a delicious good texture cooked rice food product. The "amylose content" referred to here is the apparent amylose content as measured by the iodine affinity measurement method or iodine color colorimetric method and does not necessarily match with the true amylose content. Further, the content is expressed converted to dry weight.

When producing the cooked rice food product of the present invention, the cooking procedure itself is not particularly limited. It is possible to use a usual method of production of cooked rice. The method of adding the soybean polysaccharides and the sugar alcohol is not particularly limited. It is possible to add them to the soaking water and then soak and cook the rice or, when changing the water in the soaking and cooking steps, add them only to the water for the cooking step. Alternatively, it is possible to add them during the cooking step or after the cooking step. Similarly, the method of adding the amylase is not particularly limited. The effect is obtained even if adding it from the stage of soaking the uncooked rice in water, but the effect is best if causing it to act in the state with the starch converted to the α-state. The glutination starting temperature of rice starch is 60 to 70°C. The effect is obtained by changing the cooking conditions so as to enable the rice to be held at 60°C or more for a certain period. The best effect is obtained when adding the amylase to the rice after cooking.

The water used for the soaking and cooking is not particularly limited. For example, however, it is preferable to use deaerated water. "Deaerated water" means water obtained by running water to one side of a gas permeable, liquid impermeable membrane and holding the other side at a vacuum so as to remove the gas in solution in the water.

The amount of the water used for the cooking should be an amount of water greater than the case of ordinary production of cooked rice. The amount of the water differs depending on the cooked rice food product aimed at, but usually is 150 to 230 wt% with respect to the uncooked rice, preferably 160 to 190 wt%, although it is not particularly limited.

As a preferable example of a cooked rice food product of the present invention, sushi distributed in a frozen state may be mentioned. With frozen *sushi,* at the time of heating for thawing, the fish or shellfish of the *sushi* easily is ruined by the heat. With the frozen sushi of the present invention, the fish or shellfish of the *sushi* is not ruined by the thawing in a refrigerator, there is no health problem as with thawing at room temperature, and a texture similar to that of right after production can be obtained at the time of consumption. Other examples are frozen nigiri rice balls, pilaf, and mixed rice. In such a case, it is possible to heat these for consumption, as needed, in a microwave oven after thawing in a refrigerator.

Next, embodiments of the present invention will be described with reference to examples, but the present invention is not limited by these examples. The parts and percentages in the examples are based on weight.

### Cooking Test

In the control group, test group, Example 1, and Comparative Examples 1 to 6, rice was cooked by the following methods and subjected to a 5°C storage test. Note that the state of the cooked rice was evaluated by actually consuming it after one day of storage from the start of storage, after two days, after four days, after six days, and after 10 days.
Control group: 400 g of California rice was soaked in a sufficient amount of water for one hour, then the rice was allowed to drained for 15 minutes. After this, the weight of the soaked rice was measured and water added to give a total amount of water added of 1.5 times the weight of the uncooked rice. The rice was then cooked in a home rice cooker (Sanyo Miconjar Rice Cooker ECJ-EA18 (capacity 1.8 liters)). After cooking, the rice was allowed to cool to a temperature of 70°C. When preparing *sushi* rice, 10 wt% of seasoned vinegar was added with respect to the weight of the cooked rice. The *sushi* rice was allowed to cool to room temperature, then was shaped into oblong pieces of 30 g/piece which were then wrapped in plastic wrap and stored at 5°C.
Test group: Rice was cooked and stored in exactly the same way as the control group except for making the total amount of water added at the time of cooking 1.65 times the weight of the uncooked rice.

### Example 1

In the test group, the rice was cooked by adding 1 g of soybean polysaccharides (brandname: Soyafibe-S, made by Fuji Oil Co., Ltd.) (0.25% with respect the uncooked rice) and 2 g of erythritol (made by Mitsubishi-Kagaku Foods Corporation) (0.5% with respect to uncooked rice) before cooking. After cooking, the rice was cooled to 70°C, then 620U of 20000 u/g activity β-amylase (made by Nagase Enzyme K.K., β-amylase #1500) with respect to 100 g of uncooked rice (268U with respect to 100 g of cooked rice) was dissolved in vinegar and added, then stirred for 1 minute. The rice was allowed to cool for 20 minutes and shaped into oblong pieces which were then wrapped in saran wrap and stored in a refrigerator at 5°C.

### Comparative Example 1 (Soybean Polysaccharides + β-Amylase)

Rice was cooked in exactly the same way as Example 1 except for not adding erythritol before cooking.

### Comparative Example 2 (Soybean Polysaccharides + Erythritol)

Rice was cooked in exactly the same way as Example 1 except for not adding β-amylase before cooking.

### Comparative Example 3 (Erythritol and β-Amylase)

Rice was cooked in exactly the same way as Example 1 except for not adding soybean polysaccharides before cooking.

### Comparative Example 4 (Only Soybean Polysaccharides)

Rice was cooked in exactly the same way as Example 1 except for not adding erythritol and β-amylase before cooking.

### Comparative Example 5 (Only Erythritol)

Rice was cooked in exactly the same way as Example 1 except for not adding soybean polysaccharides and β-amylase before cooking.

The results are summarized below. Note that the texture of the cooked rice is indicated, based on the texture right after cooking as a control, as "very good", "good", "fair" (slight inferior with no commercial value), and "poor".

**Table 1**

| | Right after cooking | After 1 day | After 2 days | After 4 days | After 6 days | After 10 days |
|---|---|---|---|---|---|---|
| Control group | Very good -Soft | Poor -Parched and hard | Poor -Parched and hard | Poor -Parched and hard | Poor -Parched and hard | Poor -Parched and hard |
| Test group | Good - Soft | Fair - Hard | Poor - Parched | Poor - Parched and hard | Poor - Parched and hard | Poor -Parched and hard |
| Ex. 1 | Very good - Soft | Very good - Soft | Very good - Soft | Very good - Soft | Very good - Soft | Very good - Soft |
| Comp. Ex. 1 | Very good - Soft | Very good - Soft | Good - Somewhat dry | Fair - Brittle | Fair - Brittle | Fair -Brittle |
| Comp. Ex. 2 | Very good - Soft | Very good - Soft | Good - Somewhat hard | Fair - Hard | Fair - Hard | Poor -Parched and hard |
| Comp. Ex. 3 | Good - Somewhat hard | Good - Somewhat hard | Poor - Hard surface | Poor - Hard | Poor - Hard | Poor -Hard |
| Comp. Ex. 4 | Very good - Soft | Very good - Soft | Good - Chewy | Poor - Hard surface | Poor - Hard | Poor -Hard |
| Comp. Ex. 5 | Good - Somewhat hard | Good - Somewhat hard | Fair - Hard | Poor - Hard | Poor - Hard | Poor -Hard |

In Example 2, Example 3, and Comparative Example 6, rice was cooked by the following method and a study conducted as to if there was any difference in quality of the different types of rice stored refrigerated.

### Example 2

Rice was cooked in exactly the same way as Example 1 except for adding 2 g of maltitol (0.5% with respect to uncooked rice) instead of erythritol.

### Example 3

Rice was cooked in exactly the same way as Example 1 except for adding 2 g of sorbitol (0.5% with respect to uncooked rice) instead of erythritol.

### Comparative Example 6

Rice was cooked in exactly the same way as Example 1 except for adding 2 g of trehalose (0.5% with respect to uncooked rice) instead of erythritol.

The texture of the cooked rice after storage in a refrigerated state is summarized below. Note that the texture of the cooked rice is indicated, based on the control group 1, as "very good", "good", "fair" (slight inferior with no commercial value), and "poor".

**Table 2**

| | Right after cooking | After 1 day | After 2 days | After 4 days | After 6 days | After 10 days |
|---|---|---|---|---|---|---|
| Ex. 2 | Very good - Soft | Very good - Soft | Very good - Soft | Very good - Soft | Good - Soft-like taste | Good -Soft-like taste |
| Ex. 3 | Very good - Soft | Very good - Soft | Very good - Soft | Very good - Soft | Very good to good - Soft-like taste | Good -Soft-like taste |
| Comp. Ex. 6 | Very good - Soft | Very good - Soft-like taste | Good - Soft-like taste | Fair - Hard surface | Fair - Hard | Poor -Hard |

### Example 4

Rice was cooked by the following method and examined for differences in quality of the rice stored refrigerated according to the type of the enzyme added. Exactly the same procedure was followed as in Example 1 to cook rice except for adding 260U, with respect to 100 g of uncooked rice, of glucoamylase (brandname: AMG300L, made by Novozyme K.K.) of an activity of 26000 U/ml instead of the β-amylase. The result was stored in a refrigerated state and consumed after one day, four days, and 10 days. In each case, the softness was maintained and the texture was excellent.

### Example 5

400 g of California rice was rinsed and allowed to drain, then 830 cc of deaerated water (amount of water of 2.08 times the weight of the uncooked rice) was added and the rice allowed to soak for 30 minutes. 8 g of soybean polysaccharides (brandname: Soyafibe-S, made by Fuji Oil Co., Ltd.) (2 wt%), 8 g of erythritol (2 wt%), 8 cc of vinegar (2 wt%), and 2 cc of salad oil (0.5 wt%) were added to the soaking water and the rice cooked by a home rice cooker. 0.1 g of β-amylase (brandname: β-amylase #1500, made by Nagase Enzyme K.K.) (0.025 wt%, 300U) as the amylase and 105 cc of sushi vinegar (26 wt%) were added to the thus obtained cooked rice. After this, the rice was cooled to 35°C by a cooler and shaped into oblong pieces. The shaped oblong pieces were stored frozen at -20°C. After being frozen for seven days, they were thawed in a refrigerator at 4°C over 24 hours and then consumed. The rice had the same taste and texture as right after production. Further, it was stored at 4°C for five days and again consumed. The rice became somewhat harder than right after production, but maintained its firmness and had a taste and texture enough for consumption.

### Example 6

400 g of California rice was rinsed and allowed to drain, then 720 cc of deaerated water (amount of water of 1.8 times the weight of the uncooked rice) was added and the rice allowed to soak. 6 g of soybean polysaccharides (brandname: Soyafibe-S, made by Fuji Oil Co., Ltd.) (1.5 wt%), 8 g of reduced paratinose (2 wt%), 8 cc of vinegar (2 wt%), and 2 cc of salad oil (0.5 wt%) were added to the soaking water, the rice was further soaked for one hour, then the rice cooked by a home rice cooker. 0.1 g of β-amylase (brandname: β-amylase #1500, made by Nagase Enzyme K.K.) (0.025 wt%, 300U) as the amylase was added to the thus obtained cooked rice. The rice was allowed to stand for 5 minutes, then was cooled to 35°C by a vacuum cooler and shaped into oblong pieces. The shaped oblong pieces were stored refrigerated at 4°C. The rice was consumed after two days, five days, and nine days in this state. The rice had substantially the same taste and texture as right after production even after the elapse of nine days.

Summarizing the effects of the present invention, it becomes possible to provide a cooked rice food product able to be stored at a low temperature for a long period of time and a method of production of the same.

While the invention has been described with reference to specific embodiments chosen for purpose of illustration, it should be apparent that numerous modifications could be made thereto by those skilled in the art without departing from the basic concept and scope of the invention.

## Claims

1. Cooked rice superior in low temperature tolerance containing water-soluble soybean polysaccharides, amylase, and a sugar alcohol.

2. Cooked rice as set forth in claim 1, wherein said amylase is β-amylase or glucoamirase.

3. Cooked rice as set forth in claim 1 or 2, wherein said sugar alcohol is erythritol.

4. Cooked rice as set forth in any one of claims 1 to 3, stored by freezing or refrigeration for a period of at least four days.

5. A method of production of cooked rice superior in low temperature tolerance comprising adding water-soluble soybean polysaccharides, amylase, and a sugar alcohol.
